(19) **Europäisches Patentamt**
**European Patent Office**
**Office européen des brevets**

(11) **EP 1 881 594 B1**

(12) **FASCICULE DE BREVET EUROPEEN**

(45) Date de publication et mention
de la délivrance du brevet:
**06.12.2017 Bulletin 2017/49**

(51) Int Cl.:
*H02P 21/16* *(2016.01)*      *H02P 21/14* *(2016.01)*

(21) Numéro de dépôt: **07112587.6**

(22) Date de dépôt: **17.07.2007**

(54) **Procédé d'ajustement de paramètres d'un moteur synchrone et variateur de vitesse utilisant un tel procédé**

Verfahren zur Justierung der Parameter eines Synchronmotors und Verwendung eines solchen Verfahrens in einer Drehzahlregelung

Method of adjusting parameters of a synchronous motor and variable speed drive using such a method

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **20.07.2006 FR 0653038**

(43) Date de publication de la demande:
**23.01.2008 Bulletin 2008/04**

(73) Titulaire: **Schneider Toshiba Inverter Europe SAS 27120 Pacy sur Eure (FR)**

(72) Inventeurs:
• **Malrait, François**
  **27120, Jouy Sur Eure (FR)**
• **Capitaneanu, Stéfan**
  **27220, Mousseaux Neuville (FR)**

(74) Mandataire: **Dufresne, Thierry et al**
**Schneider Electric Industries SAS**
**Service Propriété Industrielle**
**35 rue Joseph Monier - CS 30323**
**92506 Rueil-Malmaison Cedex (FR)**

(56) Documents cités:
**EP-A- 1 220 439      EP-A- 1 557 940**

**Description**

La présente invention se rapporte à un procédé d'ajustement de paramètres moteur dans un variateur de vitesse électronique, de type convertisseur de fréquence, destiné au contrôle et à la commande d'un moteur électrique de type synchrone à aimants permanents au rotor, appelé également moteur PMSM (Permanent Magnet Synchronous Motor). L'invention concerne également un variateur de vitesse mettant en oeuvre un tel procédé.

Un variateur de vitesse électronique de type convertisseur de fréquence est chargé de commander un moteur triphasé PMSM. Le variateur est alimenté par un réseau électrique alternatif à fréquence fixe et délivre au moteur une alimentation en courant alternatif dont la tension et la fréquence sont variables, en fonction des consignes de vitesse et des exigences de l'application. Pour cela, un variateur de vitesse comporte une unité de traitement capable de piloter une électronique de commande.

Pour obtenir de bonnes performances du moteur, la commande du variateur de vitesse doit être basée sur une représentation fiable d'un modèle électrique du moteur utilisant un ensemble de paramètres physiques. Il faut donc connaître un certain nombre de données représentatives des caractéristiques du moteur pour établir ce modèle.

Certaines de ces données moteur sont fournies par le constructeur du moteur électrique à commander. Ces données sont habituellement inscrites dans la documentation du moteur, par exemple.

Cependant, toutes les données nécessaires à l'élaboration du modèle du moteur ne sont pas toujours fiables ou peuvent dépendre de l'environnement du moteur, et il est donc nécessaire d'estimer certains paramètres, par calcul ou par mesure à l'aide de différentes méthodes envisageables, pour obtenir un modèle fidèle du moteur. Ces méthodes utilisent par exemple une phase préalable d'identification ou d'auto-apprentissage du moteur ou mémorisent dans le variateur des séries de valeurs estimées correspondant aux paramètres à estimer à l'aide de tableaux de données ou calculent certains paramètres au moyen d'équations empiriques.

En particulier, les paramètres électriques suivants peuvent être mal connus lors du fonctionnement : la résistance statorique du moteur $R_S$, la constante de flux du moteur $K_E$ (ou constante de force électromotrice) et les composantes de l'inductance moteur $L_D$ et $L_Q$, respectivement suivant l'axe d et suivant l'axe q, le repère d,q étant un repère orthogonal tournant à la vitesse de rotation du moteur.

De plus, certains paramètres moteur peuvent évoluer dans le temps durant le fonctionnement du moteur, en particulier la résistance statorique $R_S$ qui fluctue beaucoup avec la température du moteur. Si, à un instant donné, il existe une erreur dans l'estimation de la valeur de cette résistance statorique $R_S$, alors le courant électrique fourni au moteur par le variateur peut être plus important que nécessaire au point de fonctionnement nominal du moteur.

De même, les composantes de l'inductance moteur d'axe d $L_D$ et d'axe q $L_Q$ du moteur peuvent varier lors d'un fonctionnement en zone de défluxage (au-delà de la vitesse nominale). Or, la précision dynamique du couple fourni par le moteur dépend de la précision de la valeur de l'inductance moteur. Lorsque le moteur est piloté par un courant d'axe d (ou courant de flux) nul, l'erreur sur l'inductance $L_D$ d'axe d n'est pas observable. Il est néanmoins préférable de l'adapter par homogénéité de la même manière que l'inductance $L_Q$ d'axe q.

De même, la valeur de la constante de flux $K_E$ du moteur peut varier lors d'un fonctionnement en zone de défluxage ou avec la température du moteur. Or, la précision du couple fourni par le moteur dépend de la précision de la valeur de la constante de flux.

On peut ainsi dégrader les performances de l'ensemble variateur + moteur en entraînant des problèmes de consommation, de surchauffe ou en générant des oscillations de courant, de vitesse et de couple. Il serait donc appréciable de pouvoir ajuster, en cours de fonctionnement, les paramètres préalablement estimés de façon à optimiser la commande du moteur.

Le document EP1220439 décrit une méthode de détermination des paramètres d'un moteur à aimants permanents, notamment la résistance statorique $R_S$, l'inductance moteur $L_D$, $L_Q$, et la constante de flux $K_E$. Cependant, cette méthode nécessite l'utilisation de nombreux capteurs pour effectuer en particulier des mesures de température moteur, de tensions moteur, de couple moteur, de rotation moteur, ce qui rend son application difficile et onéreuse dans un variateur de vitesse.

C'est pourquoi l'invention a pour but, lorsqu'une mesure de la vitesse moteur existe dans le variateur (c'est-à-dire avec un fonctionnement en boucle fermée), de corriger en temps réel les valeurs de la résistance statorique $R_S$ du moteur, des composantes $L_D$ et $L_Q$ de l'inductance moteur et de la constante de flux $K_E$ du moteur, en utilisant le terme intégral de la boucle de courant, permettant ainsi d'ajuster les valeurs des paramètres du modèle moteur, sans nécessiter notamment des mesures de température ou de couple au niveau du moteur.

Pour cela, l'invention décrit un procédé d'ajustement de paramètres moteur dans un variateur de vitesse destiné à la commande d'un moteur électrique synchrone PMSM. Le procédé comprend une étape de détermination d'un premier écart entre une référence du courant de couple moteur et une mesure du courant de couple moteur, et d'un second écart entre une référence du courant de flux moteur et une mesure du courant de flux moteur, une étape de calcul d'une valeur de correction de la résistance statorique du moteur, d'une valeur de correction de l'inductance moteur et d'une valeur de correction de la constante de flux du moteur, à partir du terme intégral dudit premier écart et du terme intégral dudit second écart, une étape d'ajustement des valeurs des paramètres du modèle moteur à partir desdites valeurs de correction de la résistance statorique du moteur, de l'inductance moteur et de la constante de flux du moteur et une étape d'élaboration des tensions de commande à appliquer au moteur en utilisant lesdites valeurs ajustées des paramètres moteur.

Selon une caractéristique, la référence du courant de couple est obtenue à partir d'une référence de la vitesse moteur et d'une mesure de la vitesse du moteur.

Selon une autre caractéristique, l'ajustement de la valeur d'un paramètre du modèle moteur est effectué durant l'étape d'ajustement seulement lorsque la valeur d'une ou plusieurs grandeurs caractéristiques de ce paramètre dépasse un seuil prédéterminé, cette valeur ou ces valeurs dépendant de la mesure de vitesse moteur et de la référence du courant de couple moteur.

L'invention décrit également un variateur de vitesse doté d'une unité de traitement comprenant un bloc régulateur de courant fournissant des tensions de commande du moteur. Le bloc régulateur de courant comporte un bloc intégrateur, un bloc adaptateur et un bloc compensation pour mettre en oeuvre le procédé d'ajustement de paramètres moteur.

D'autres caractéristiques et avantages vont apparaître dans la description détaillée qui suit en se référant à un mode de réalisation donné à titre d'exemple et représenté par les dessins annexés sur lesquels :

- la figure 1 représente un schéma simplifié de la commande d'un moteur synchrone selon l'invention,
- la figure 2 détaille le bloc régulateur de courant 15 de la figure 1.

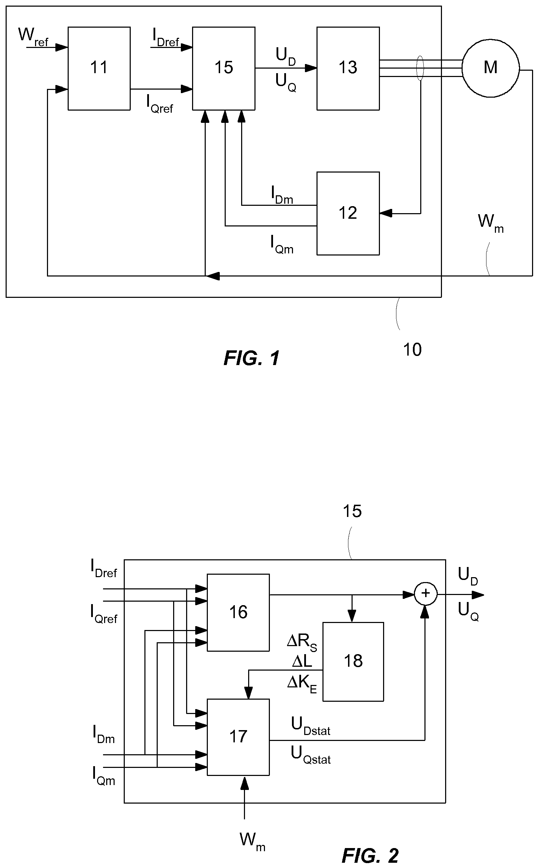

En référence à la figure 1, un variateur de vitesse, de type convertisseur de fréquence, est chargé de commander et contrôler un moteur électrique M synchrone triphasé de type PMSM, grâce à une unité de traitement 10 capable notamment de piloter une électronique de commande (non représentée sur la figure 1). Un capteur de vitesse permet de fournir au variateur un retour de la vitesse réelle du moteur $W_m$.

Par la suite, la référence du courant d'axe q $I_{Qref}$ sera notée référence courant de couple $I_{Qref}$ et la référence du courant d'axe d $I_{Dref}$ sera notée référence courant de flux $I_{Dref}$. Cette dernière notation est utilisée même si, dans la plage de fonctionnement normal d'un moteur PMSM, le courant de flux $I_{Dref}$ est égal à zéro car le flux est déjà présent grâce à l'aimant du moteur. Néanmoins, en cas de défluxage le courant de flux peut être différent de zéro. Comme indiqué précédemment, le repère d,q est un repère orthogonal tournant à la vitesse de rotation du moteur.

L'unité de traitement 10 du variateur de vitesse comprend un bloc régulateur de vitesse 11 qui reçoit en entrée une référence de la vitesse moteur $W_{ref}$ et la mesure de vitesse moteur $W_m$, de manière à délivrer en sortie une référence du courant de couple moteur $I_{Qref}$. Cette référence du courant de couple $I_{Qref}$ est déterminée avec précision puisqu'elle s'appuie sur une valeur réelle mesurée $W_m$ de la vitesse moteur.

L'unité de traitement 10 du variateur de vitesse comprend ensuite un bloc régulateur de courant 15 qui reçoit en entrée une référence du courant de flux moteur $I_{Dref}$ et la référence du courant de couple moteur $I_{Qref}$ issue du bloc 11. Le bloc 15 reçoit également les valeurs mesurées des courants de couple et de flux moteur, respectivement $I_{Qm}$, $I_{Dm}$, ainsi que la mesure de vitesse moteur $W_m$. Les valeurs $I_{Qm}$, $I_{Dm}$ peuvent provenir d'un bloc convertisseur 12 qui transforme de façon connue des mesures issues de capteurs de courant sur les conducteurs d'alimentation du moteur (c'est-à-dire conversion par rotation des courants des trois phases du moteur en coordonnées dans le repère d,q).

Le bloc régulateur de courant 15 fournit en sortie des tensions de commande de flux $U_D$ et de commande de couple $U_Q$ à un bloc convertisseur 13 qui les transforment de manière connue en consignes de tension vers une électronique de commande alimentant les différentes phases du moteur M au moyen de composants semi-conducteurs de puissance.

Selon l'invention, le bloc régulateur de courant 15 comprend un bloc intégrateur 16 qui calcule le terme intégral d'un premier écart $\Delta I_Q$ existant entre la référence du courant de couple moteur $I_{Qref}$ et la mesure du courant de couple moteur $I_{Qm}$, et le terme intégral d'un second écart $\Delta I_D$ existant entre la référence du courant de flux moteur $I_{Dref}$ et la mesure du courant de flux moteur $I_{Dm}$.

Au point de fonctionnement d'équilibre du moteur, nous avons la relation suivante écrite sous forme vectorielle :

$$\begin{pmatrix} \int (I_{Dref} - I_{Dm}) \\ \int (I_{Qref} - I_{Qm}) \end{pmatrix} = \begin{pmatrix} \int \Delta I_D \\ \int \Delta I_Q \end{pmatrix} = k \begin{pmatrix} \Delta R_S \\ \Delta L \\ \Delta K_E \end{pmatrix}$$

dans laquelle $\Delta R_S$ représente la valeur relative de correction de la résistance statorique $R_S$, $\Delta K_E$ représente la valeur relative de correction de la constante de flux $K_E$ et $\Delta L$ représente la valeur relative de correction de l'inductance moteur. En effet, on assimile $\Delta L_D$ à la valeur de correction mesurée $\Delta L_Q$ et on les nomme simplement $\Delta L$. Selon un mode

réalisation, il est possible d'envisager une valeur de correction $\Delta L$ ne portant que sur la composante d'axe q $L_Q$ de l'inductance moteur. Néanmoins, il est préférable que la valeur de correction $\Delta L$ porte sur les deux composantes d'axe d $L_D$ et d'axe q $L_Q$ de l'inductance moteur.

Le coefficient k peut s'exprimer comme une matrice de transfert dépendant des paramètres et du point de fonctionnement qui s'obtient par la relation suivante :

$$\begin{pmatrix} \int \Delta I_D \\ \int \Delta I_Q \end{pmatrix} = \begin{pmatrix} 0 & W_m * L_Q * I_{Qref} & 0 \\ -R_S * I_{Qref} & 0 & W_m * K_E \end{pmatrix} \begin{pmatrix} \Delta R_S \\ \Delta L \\ \Delta K_E \end{pmatrix}$$

Ainsi, en régime stable de fonctionnement du moteur, le calcul des termes intégraux des écarts de courant $\Delta I_D$ et $\Delta I_Q$ permettent de déterminer en temps réel des valeurs de correction $\Delta R_S$, $\Delta L$ et $\Delta K_E$ à appliquer à la résistance statorique $R_S$, aux composantes d'axe d $L_D$ et d'axe q $L_Q$ de l'inductance et à la constante de flux $K_E$ du moteur de façon à pouvoir d'affiner en permanence le modèle moteur avec des valeurs réelles de la résistance statorique $R_S$, des composantes $L_D$, $L_Q$ de l'inductance et de la constante de flux $K_E$.

Le bloc régulateur de courant 15 comprend donc un bloc adaptateur de paramètres 18 qui reçoit en entrée les termes intégraux de $\Delta I_D$ et de $\Delta I_Q$ de façon à calculer $\Delta R_S$, $\Delta L$ et $\Delta K_E$ pour obtenir des valeurs corrigées de la résistance statorique $R_S$, des composantes $L_D$, $L_Q$ de l'inductance et de la constante de flux $K_E$ du moteur, ainsi que des autres paramètres moteur qui dépendent de ces paramètres, comme par exemple $T_S$, la constante de temps électrique. Grâce à l'invention, tant que les termes intégraux de $\Delta I_D$ et de $\Delta I_Q$ ne seront pas nuls, les paramètres $R_S$, $L_D$, $L_Q$ et $K_E$ seront ajustés permettant ainsi d'améliorer en continu les paramètres du modèle moteur. Une fois que les valeurs exactes de $R_S$, $L_D$, $L_Q$ et $K_E$ seront atteintes, les termes intégraux de $\Delta I_D$ et de $\Delta I_Q$ convergeront alors vers zéro.

Les nouveaux paramètres corrigés sont ensuite introduits dans un bloc compensation 17 (appelé aussi feed-forward) qui calcule les parties statiques (offset) de la tension de commande de flux $U_{Dstat}$ et de la tension de commande de couple $U_{Qstat}$, grâce aux relations suivantes :

$$U_{Dstat} = R_S * I_{Dref} - L_Q * W_m * I_{Qref}$$

$$U_{Qstat} = R_S * I_{Qref} + L_D * W_m * I_{Dref} + W_m * K_E$$

Les parties statiques des tensions $U_{Dstat}$, $U_{Qstat}$ issues du bloc compensation 17 sont ensuite additionnées avec les termes proportionnels et intégraux de respectivement $\Delta I_D$, $\Delta I_Q$ issus de la sortie du bloc intégrateur 16, pour fournir en sortie du bloc régulateur de courant 15 les consignes des tensions de commande de flux $U_D$ et de commande de couple $U_Q$ à appliquer au moteur, selon les relations :

$$U_D = U_{Dstat} + K_P * \Delta I_D + K_I * \int \Delta I_D$$

$$U_Q = U_{Qstat} + K_P * \Delta I_Q + K_I * \int \Delta I_Q$$

dans lesquelles $K_P$ et $K_I$ représentent respectivement le gain proportionnel et le gain intégral de la régulation de courant.

Le procédé d'ajustement comprend donc les étapes suivantes :

- une étape de détermination du terme intégral du premier écart $\Delta I_Q$, et du terme intégral du second écart $\Delta I_D$, réalisée dans le bloc intégrateur 16,
- une étape de calcul de la valeur de correction $\Delta R_S$, de la valeur de correction $\Delta L$ et de la valeur de correction $\Delta K_E$ à partir du terme intégral du premier écart $\Delta I_Q$ et à partir du terme intégral du second écart $\Delta I_D$,
- une étape d'ajustement des valeurs des paramètres $R_S$, $L_D$, $L_Q$ et $K_E$ du modèle moteur à partir des valeurs de correction $\Delta R_S$, $\Delta L$ et $\Delta K_E$, ces deux étapes étant réalisées dans le bloc adaptateur 18,
- une étape d'élaboration en sortie du bloc régulateur 15 de la tension de commande de flux $U_D$ et de la tension de commande de couple $U_Q$ appliquées au moteur M, en utilisant les valeurs ajustées des paramètres moteur. Cette étape d'élaboration de $U_D$ et $U_Q$ comprend une étape de calcul des parties statiques $U_{Dstat}$ et $U_{Qstat}$ dans le bloc compensation 17 et une étape d'addition de $U_{Dstat}$ et $U_{Qstat}$ avec les termes proportionnels et intégraux de $\Delta I_D$ et $\Delta I_Q$ pour fournir $U_D$ et $U_Q$.

Préférentiellement, l'étape d'ajustement de chacun des différents paramètres $R_S$, $L_D$, $L_Q$ et $K_E$ est mise en oeuvre à l'aide du procédé décrit dans la présente invention sous certaines conditions. L'ajustement de la valeur d'un paramètre du modèle moteur est effectué seulement lorsque la valeur d'une ou plusieurs grandeurs caractéristiques associées à ce paramètre dépasse un seuil prédéterminé. En effet, lorsque la valeur d'une ou des grandeurs caractéristiques associées à ces paramètres se situe en dessous d'un seuil prédéterminé, les autres paramètres du moteur deviennent prépondérants par rapport à ce paramètre à ajuster. L'ajustement de ce paramètre pourrait donc induire une erreur relative qui risquerait de perturber le bon fonctionnement du procédé décrit.

L'ajustement des valeurs des paramètres $R_S$, $L_D$, $L_Q$ et $K_E$ est réalisé de la manière suivante :

- La résistance $R_S$ est ajustée seulement lorsque les valeurs de ses grandeurs caractéristiques $|I_{Qref} / W_m|$ et $| I_{Qref} |$ dépassent toutes les deux des seuils prédéterminés. Par exemple, le seuil pour la grandeur $| I_{Qref} / W_m |$ correspond environ au ratio entre la constante de flux nominal $K_E$ mémorisée par défaut et la résistance statorique $R_S$ mémorisée par défaut et le seuil pour la grandeur $I_{Qref} |$ correspond au ratio entre une tension minimale et la résistance statorique $R_S$ mémorisée par défaut, cette tension minimale ayant une valeur définie comme égale au centième de la tension nominale du moteur.
- Les composantes $L_D$, $L_Q$ de l'inductance sont ajustées seulement lorsque la grandeur $| W_m * I_{Qref} |$ dépasse un seuil prédéterminé. Par exemple, ce seuil correspond environ au ratio entre une tension minimale et l'inductance $L_Q$ mémorisée par défaut, avec la valeur de la tension minimale définie comme égale au centième de la tension nominale du moteur.
- La constante de flux $K_E$ est ajustée seulement lorsque les grandeurs $| W_m/I_{Qref} |$ et $| W_m |$ dépassent toutes les deux des seuils prédéterminés. Par exemple, le seuil pour la grandeur $| W_m / I_{Qref} |$ correspond environ au ratio entre la résistance statorique mémorisée par défaut et la constante de flux $K_E$ mémorisée par défaut tandis que le seuil pour la grandeur $| W_m |$ correspond au ratio entre une tension minimale et la constante de flux $K_E$ mémorisée par défaut, la tension minimale étant définie comme égale au centième de la tension nominale du moteur.

Il est bien entendu que l'on peut, sans sortir du cadre de l'invention, imaginer d'autres variantes et perfectionnements de détail et de même envisager l'emploi de moyens équivalents.

**Revendications**

1. Procédé d'ajustement de paramètres moteur dans un variateur de vitesse destiné à la commande d'un moteur électrique synchrone à aimants permanents (M), le procédé comprenant une étape de détermination d'un premier écart ($\Delta I_Q$) entre une référence du courant de couple moteur ($I_{Qref}$) et une mesure du courant de couple moteur ($I_{Qm}$), et d'un second écart ($\Delta I_D$) entre une référence du courant de flux moteur ($I_{Dref}$) et une mesure du courant de flux moteur ($I_{Dm}$),
**caractérisé en ce que** le procédé comprend :

   - une étape de calcul d'une valeur de correction ($\Delta R_S$) de la résistance statorique du moteur, d'une valeur de correction ($\Delta L$) de l'inductance moteur et d'une valeur de correction ($\Delta K_E$) de la constante de flux du moteur, à partir du terme intégral dudit premier écart ($\Delta I_Q$) et du terme intégral dudit second écart ($\Delta I_D$),
   - une étape d'ajustement des valeurs des paramètres du modèle moteur à partir desdites valeurs de correction ($\Delta R_S$, $\Delta L$, $\Delta K_E$) de la résistance statorique du moteur, de l'inductance moteur et de la constante de flux du moteur,
   - une étape d'élaboration des tensions de commande ($U_D$, $U_Q$) à appliquer au moteur (M) en utilisant lesdites valeurs ajustées des paramètres moteur.

2. Procédé selon la revendication 1, **caractérisé en ce que** la référence du courant de couple ($I_{Qref}$) est obtenue à partir d'une référence de la vitesse moteur ($W_{ref}$) et d'une mesure de la vitesse du moteur ($W_m$).

3. Procédé selon la revendication 2, **caractérisé en ce que** l'ajustement de la valeur d'un paramètre du modèle moteur est effectué durant l'étape d'ajustement seulement lorsque la valeur d'une ou plusieurs grandeurs caractéristiques de ce paramètre dépasse un seuil prédéterminé, cette valeur ou ces valeurs dépendant de la mesure de vitesse moteur ($W_m$) et de la référence du courant de couple moteur ($I_{Qref}$).

4. Variateur de vitesse destiné à la commande d'un moteur électrique synchrone à aimants permanents (M), doté d'une unité de traitement (10) comprenant un bloc régulateur de courant (15) fournissant des tensions de commande du moteur (M), **caractérisé en ce que** le bloc régulateur de courant (15) comporte :

- Un bloc intégrateur (16) pour déterminer un premier écart ($\Delta I_Q$) entre une référence du courant de couple moteur ($I_{Qref}$) et une mesure du courant de couple moteur ($I_{Qm}$), et un second écart ($\Delta I_D$) entre une référence du courant de flux moteur ($I_{Dref}$) et une mesure du courant de flux moteur ($I_{Dm}$),
- Un bloc adaptateur (18) calculant une valeur de correction ($\Delta R_S$) de la résistance statorique du moteur, une valeur de correction ($\Delta L$) de l'inductance moteur et une valeur de correction ($\Delta K_E$) de la constante de flux du moteur, à partir du terme intégral dudit premier écart ($\Delta I_Q$) et du terme intégral dudit second écart ($\Delta I_D$), et ajustant des valeurs des paramètres du modèle moteur à partir desdites valeurs de correction ($\Delta R_S$, $\Delta L$, $\Delta K_E$) de la résistance statorique du moteur, de l'inductance moteur et de la constante de flux du moteur,
- Un bloc compensation (17) utilisant lesdites valeurs ajustées des paramètres moteur pour élaborer des tensions de commande ($U_D$, $U_Q$) à appliquer au moteur (M).

**5.** Variateur de vitesse selon la revendication 4, **caractérisé en ce que** l'unité de traitement (10) comporte un bloc régulateur de vitesse (11) calculant la référence du courant de couple ($I_{Qref}$) à partir d'une référence de la vitesse moteur ($W_{ref}$) et d'une mesure de la vitesse du moteur ($W_m$).

**6.** Variateur de vitesse selon la revendication 5, **caractérisé en ce que** l'ajustement de la valeur d'un paramètre du modèle moteur est effectué dans le bloc adaptateur (18) seulement lorsque la valeur d'une ou plusieurs grandeurs caractéristiques de ce paramètre dépasse un seuil prédéterminé, cette valeur ou ces valeurs dépendant de la mesure de vitesse moteur ($W_m$) et de la référence du courant de couple moteur ($I_{Qref}$).

**Patentansprüche**

**1.** Verfahren zur Justierung von Motorparametern in einem Umrichter, der zur Steuerung eines elektrischen Synchronmotors mit Permanentmagneten (M) bestimmt ist, wobei das Verfahren einen Schritt der Bestimmung einer ersten Abweichung ($\Delta I_Q$) zwischen einem Referenzwert des Drehmomentstroms des Motors ($I_{Dref}$) und einem Messwert des Drehmomentstroms des Motors ($I_{Qm}$) sowie einer zweiten Abweichung ($\Delta I_D$) zwischen einem Referenzwert des Magnetflussstroms des Motors ($I_{Dref}$) und einem Messwert des Magnetflussstroms ($I_{Dm}$) umfasst, **dadurch gekennzeichnet, dass** das Verfahren umfasst:

- einen Schritt der Berechnung eines Korrekturwertes ($\Delta Rs$) des Statorwiderstandes des Motors, eines Korrekturwertes ($\Delta L$) der Motorinduktivität und eines Korrekturwertes ($\Delta K_E$) der Flusskonstanten des Motors aus dem Integralterm der ersten Abweichung ($\Delta I_Q$) und dem Integralterm der zweiten Abweichung ($\Delta I_D$),
- einen Schritt der Justierung der Werte der Parameter des Motormodells anhand der Korrekturwerte ($\Delta R_S$, $\Delta L$, $\Delta K_E$) des Statorwiderstandes des Motors, der Motorinduktivität und der Flusskonstanten des Motors,
- einen Schritt der Ermittlung der an den Motor (M) anzulegenden Steuerspannungen ($U_D$, $U_Q$) unter Verwendung der justierten Werte der Motorparameter.

**2.** Verfahren nach Anspruch 1, **dadurch gekennzeichnet, dass** der Referenzwert des Drehmomentstroms ($I_{Qref}$) aus einem Referenzwert der Motordrehzahl ($W_{ref}$) und einem Messwert der Motordrehzahl ($W_m$) erhalten wird.

**3.** Verfahren nach Anspruch 2, **dadurch gekennzeichnet, dass** die Justierung des Wertes eines Parameters des Motormodells während des Schrittes der Justierung nur durchgeführt wird, wenn der Wert einer oder mehrerer charakteristischer Größen dieses Parameters einen vorbestimmten Schwellenwert überschreitet, wobei dieser Wert oder diese Werte vom Messwert der Motordrehzahl ($W_m$) und vom Referenzwert des Drehmomentstroms des Motors ($I_{Qref}$) abhängt bzw. abhängen.

**4.** Umrichter, welcher zur Steuerung eines elektrischen Synchronmotors mit Permanentmagneten (M) bestimmt ist und mit einer Verarbeitungseinheit (10) ausgestattet ist, die einen Stromreglerblock (15) umfasst, der Steuerspannungen für den Motor (M) liefert, **dadurch gekennzeichnet, dass** der Stromreglerblock (15) aufweist:

- einen Integratorblock (16) zum Bestimmen einer ersten Abweichung ($\Delta I_Q$) zwischen einem Referenzwert des Drehmomentstroms des Motors ($I_{Dref}$) und einem Messwert des Drehmomentstroms des Motors ($I_{Qm}$) und einer zweiten Abweichung ($\Delta I_D$) zwischen einem Referenzwert des Magnetflussstroms des Motors ($I_{Dref}$) und einem Messwert des Magnetflussstroms ($I_{Dm}$),

- einen Adapterblock (18), der einen Korrekturwert ($\Delta R_S$) des Statorwiderstandes des Motors, einen Korrekturwert ($\Delta L$) der Motorinduktivität und einen Korrekturwert ($\Delta K_E$) der Flusskonstanten des Motors aus dem Integralterm der ersten Abweichung ($\Delta I_Q$) und dem Integralterm der zweiten Abweichung ($\Delta I_D$) berechnet und Werte der Parameter des Motormodells anhand der Korrekturwerte ($\Delta R_S$, $\Delta L$, $\Delta K_E$) des Statorwiderstandes des Motors, der Motorinduktivität und der Flusskonstanten des Motors justiert,
- einen Kompensationsblock (17), der die justierten Werte der Motorparameter verwendet, um an den Motor (M) anzulegende Steuerspannungen ($U_D$, $U_Q$) zu ermitteln.

5. Umrichter nach Anspruch 4, **dadurch gekennzeichnet, dass** die Verarbeitungseinheit (10) einen Drehzahlreglerblock (11) aufweist, der den Referenzwert des Drehmomentstroms ($I_{Qref}$) aus einem Referenzwert der Motordrehzahl ($W_{ref}$) und einem Messwert der Motordrehzahl ($W_m$) berechnet.

6. Umrichter nach Anspruch 5, **dadurch gekennzeichnet, dass** die Justierung des Wertes eines Parameters des Motormodells in dem Adapterblock (18) nur durchgeführt wird, wenn der Wert einer oder mehrerer charakteristischer Größen dieses Parameters einen vorbestimmten Schwellenwert überschreitet, wobei dieser Wert oder diese Werte vom Messwert der Motordrehzahl ($W_m$) und vom Referenzwert des Drehmomentstroms des Motors ($I_{Qref}$) abhängt bzw. abhängen.

## Claims

1. Method of adjusting motor parameters in a variable speed drive designed for controlling a synchronous electric motor with permanent magnets (M), the method comprising a step of determining a first deviation ($\Delta I_Q$) between a reference of the motor torque current ($I_{Qref}$) and a measurement of the motor torque current ($I_{Qm}$), and a second deviation ($\Delta I_D$) between a reference of the motor flux current ($I_{Dref}$) and a measurement of the motor flux current ($I_{Dm}$), **characterized in that** the method comprises:

   - a step of calculating a correction value ($\Delta R_S$) of the stator resistance of the motor, a correction value ($\Delta L$) of the motor inductance and a correction value ($\Delta K_E$) of the flux constant of the motor, on the basis of the integral term of the said first deviation ($\Delta I_Q$) and of the integral term of the said second deviation ($\Delta I_D$),
   - a step of adjusting the values of the parameters of the motor model on the basis of the said correction values ($\Delta R_S$, $\Delta L$, $\Delta K_E$) of the stator resistance of the motor, of the motor inductance and of the flux constant of the motor,
   - a step of formulating the control voltages ($U_D$, $U_Q$) to be applied to the motor (M) by using the said adjusted values of the motor parameters.

2. Method according to Claim 1, **characterized in that** the reference of the torque current ($I_{Qref}$) is obtained on the basis of a reference of the motor speed ($W_{ref}$) and of a measurement of the speed of the motor ($W_m$).

3. Method according to Claim 2, **characterized in that** the adjustment of the value of a parameter of the motor model is performed during the adjustment step only when the value of one or more quantities characteristic of this parameter exceeds a predetermined threshold, this value or these values depending on the motor speed measurement ($W_m$) and the reference of the motor torque current ($I_{Qref}$).

4. Variable speed drive designed for controlling a synchronous electric motor with permanent magnets (M), having a processing unit (10) comprising a current regulator block (15) providing control voltages for the motor (M), **characterized in that** the current regulator block (15) comprises:

   - An integrator block (16) for determining a first deviation ($\Delta I_Q$) between a reference of the motor torque current ($I_{Qref}$) and a measurement of the motor torque current ($I_{Qm}$), and a second deviation ($\Delta I_D$) between a reference of the motor flux current ($I_{Dref}$) and a measurement of the motor flux current ($I_{Dm}$),
   - An adaptor block (18) calculating a correction value ($\Delta R_S$) of the stator resistance of the motor, a correction value ($\Delta L$) of the motor inductance and a correction value ($\Delta K_E$) of the flux constant of the motor, on the basis of the integral term of the said first deviation ($\Delta I_Q$) and of the integral term of the said second deviation ($\Delta I_D$), and adjusting values of the parameters of the motor model on the basis of the said correction values ($\Delta R_S$, $\Delta L$, $\Delta K_E$) of the stator resistance of the motor, of the motor inductance and of the flux constant of the motor,
   - A compensation block (17) using the said adjusted values of the motor parameters to formulate control voltages ($U_D$, $U_Q$) to be applied to the motor (M).

5. Variable speed drive according to Claim 4, **characterized in that** the processing unit (10) comprises a speed regulator block (11) calculating the reference of the torque current ($I_{Qref}$) on the basis of a reference of the motor speed ($W_{ref}$) and of a measurement of the speed of the motor ($W_m$).

6. Variable speed drive according to Claim 5, **characterized in that** the adjustment of the value of a parameter of the motor model is performed in the adaptor block (18) only when the value of one or more quantities characteristic of this parameter exceeds a predetermined threshold, this value or these values depending on the motor speed measurement ($W_m$) and the reference of the motor torque current ($I_{Qref}$).

**FIG. 1**

10

**FIG. 2**

**EP 1 881 594 B1**

## RÉFÉRENCES CITÉES DANS LA DESCRIPTION

**Documents brevets cités dans la description**

*   EP 1220439 A